# EUROPÄISCHE PATENTANMELDUNG

(11) **EP 4 456 391 A1**
(43) Veröffentlichungstag der Anmeldung: **30.10.2024**
(21) Anmeldenummer: 23169838.2
(22) Anmeldetag: 25.04.2023
(51) Int. Cl.: H02K 15/12

(54) **VERFAHREN ZUR IMPRÄGNIERUNG SOWIE EINE IMPRÄGNIERVORRICHTUNG**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Die Erfindung betrifft ein Verfahren zur Imprägnierung eines wenigstens eine Wicklung (41) tragenden Körpers (4), insbesondere für eine elektrische Maschine (1), beispielsweise für einen Rotor (3) oder Stator (2),
wobei der Körper (4) mit einem, vorzugsweise Harz aufweisenden, Imprägniermaterial (6) beträufelt wird,
wobei der Körper (4) vor und/oder während und/oder nach der Beträufelung um eine Rotationsachse (A) bewegt wird wobei die Wicklung (41) vor und/oder während und/oder nach der Beträufelung von Strom durchflossen wird. Die Erfindung betrifft ferner eine Imprägniervorrichtung (10).

## Beschreibung

Die Erfindung betrifft ein Verfahren zur Imprägnierung sowie eine Imprägniervorrichtung.

Die Imprägnierung von Elektromotoren, also insbesondere das Eintauchen, Beträufeln bzw. ein Beschichten der Rotoren und/oder Statoren, mit, vorzugsweise flüssigem, Imprägnierharz und die meist anschließende, insbesondere thermische, Härtung ist im Herstellungsprozess des Motors ein besonders energieaufwändiger Schritt.

Es sind verschiedene Verfahren zur Imprägnierung bekannt, z. B. Tauchen, Träufeln oder auch eine Flutung. Hierbei wird meist flüssiges Harz auf die zu imprägnierenden Komponenten aufgebracht. Eine anschließende Trockung und Aushärtung über mehrere Stunden bei ca. 150°C ist besonders zeit- und energieintensiv. Zudem wird dafür ein Ofen, beispielsweise in Form einer Ofenstrecke, benötigt. Anschließend werden die Komponenten meist in einer Kühlstrecke abgekühlt, um Taktzeiten zu verkürzen und eine Weiterarbeit zu ermöglichen. Auch dies bedeutet einen hohen Energieaufwand.

Der Erfindung liegt die Aufgabe zugrunde, die Imprägnierung von Elektromotoren zu verbessern.

Die Lösung der Aufgabe gelingt durch ein Verfahren gemäß Anspruch 1, d. h. ein Verfahren zur Imprägnierung eines wenigstens eine Wicklung tragenden Körpers, insbesondere für eine elektrische Maschine, beispielsweise für einen Rotor oder Stator, wobei der Körper mit einem, vorzugsweise Harz aufweisenden, Imprägniermaterial beträufelt wird, wobei der Körper vor und/oder während und/oder nach der Beträufelung um eine Rotationsachse bewegt wird, wobei die Wicklung vor und/oder während und/oder nach der Beträufelung von Strom durchflossen wird.

Das Verfahren ist besonders gut geeignet für Rotoren und/oder Statoren dynamoelektrischer rotatorischer Maschinen. Ferner ist das Verfahren auch geeignet, um elektrische Maschinen im Allgemeinen, z. B. Transformatoren, zu imprägnieren.

Imprägnieren steht vorteilhaft im Sinne der vorliegenden Erfindung für Imprägnieren, Verfestigen oder Elektroisolieren.

Das Imprägniermaterial weist vorzugsweise Harz auf.

Das Harz ist vorzugsweise dergestalt, dass es unter Temperaturerhöhung aushärtet.

Das Imprägniermaterial kann ausschließlich Harz aufweisen. Das Imprägniermaterial kann auch ein Harz-Härter-Gemisch sein, insbesondere in Form eines mehrkomponentigen Harzsystems, aufweisend wenigstens zwei Komponenten, wobei eine erste Komponente ein Harz ist, wobei eine zweite Komponente ein Härter ist.

Das Harz ist vorteilhaft ein Epoxidharz.

Der Härter ist vorteilhaft aminbasiert.

Der Körper wird vor und/oder während und/oder nach der Beträufelung um eine Rotationsachse bewegt.

Der Körper vollzieht vorteilhaft keine Dauerrotation, sondern pendelt vorteilhaft zwischen zwei Stellungen.

Vorteilhaft ist eine Ausführung, wonach der Körper um einen ersten Winkel in einer ersten Drehrichtung, vorzugsweise in positiver Drehrichtung, gedreht wird, wobei der Körper um den negativen ersten Winkel oder einen zweiten Winkel in einer zweiten Drehrichtung, vorzugsweise in negativer Drehrichtung, gedreht wird.

In anderen Worten bedeutet dies, dass der Körper um einen ersten Winkel in Vorwärtsrichtung gedreht wird, wobei der Körper um den ersten Winkel oder einen zweiten Winkel in Rückwärtsrichtung gedreht wird.

Der Körper rotiert vorteilhaft in einer Pendelrotation. Vorteilhaft vollzieht der Körper keine fortlaufende Bewegung mit einer bestimmten Winkelgeschwindigkeit.

Vorteilhaft wird der Körper in der ersten Drehrichtung bewegt, angehalten (also Geschwindigkeit=0) und anschließend in der zweiten Drehrichtung bewegt.

Vorteilhaft ist eine Ausführung, wonach der Körper in der ersten Drehrichtung mit einer ersten Drehgeschwindigkeit bewegt wird, wobei der Körper in der zweiten Drehrichtung mit einer zweiten Drehgeschwindigkeit bewegt wird, wobei die erste Drehgeschwindigkeit größer ist als die zweite Drehgeschwindigkeit.

Die erste Drehgeschwindigkeit und die zweite Drehgeschwindigkeit können jedoch auch gleich sein.

Die Drehgeschwindigkeit liegt vorteilhat zwischen 5 1/min und 40 1/min.

So kann eine besonders homogene Verteilung des Imprägniermaterials erreicht werden.

Vorteilhaft ist eine Ausführung, wonach das Imprägniermaterial mittels einer Dosierdüse auf den Körper bzw. in Richtun des Körpers geleitet wird.

Auf diese Weise gelingt die Beträufelung besonders gut und gleichmäßig.

Es können auch zwei oder mehr Dosierdüsen ausgebildet sein.

Vorteilhaft ist eine Ausführung, wonach eine Dosiermenge, die auf den Körper aufgetragen wird, wenn er in der ersten Drehrichtung bewegt wird, größer ist als eine Dosiermenge, die auf den Körper aufgetragen wird, wenn er in der zweiten Drehrichtung bewegt wird.

In anderen Worten bedeutet dies: Die Dosiermenge kann z.B. während einer vollen Umdrehung um 360° in Vorwärtsrichtung ein Maximum erreichen und anschließend in Rückwärtsrichtung ein Minimum erreichen.

Ein Übergang von Maximum zu Minimum kann abrupt sein.

Ein Übergang von Maximum zu Minimum kann auch fließend sein.

So kann ein Abtropfen verhindert werden.

Vorteilhaft ist eine Ausführung, wonach das Imprägniermaterial auf ein axiales Ende des Körpers geleitet wird.

Besonders vorteilhaft ist dies, wenn der Körper sich in einer in Bezug zur Horizontalen gekippten Lage befindet. Das Imprägniermaterial, z. B. Harz, wird vorteilhaft auf das axiale Ende des Körpers, welches bezüglich der Erdoberfläche höher liegt als das andere axiale Ende, aufgebracht.

Das Imprägniermaterial kann vorteilhaft durch die geneigte Stellung in Richtung des anderen axialen Endes fließen bzw. in Richtung eines Punktes, an welchem die Imprägnierung enden soll. Der Körper kann vollständig oder teilweise imprägniert werden.

Besonders vorteilhaft ist, wenn der Körper rotiert, wenn das Imprägniermaterial aufgebracht wird. Auf diese Weise kann eine besonders homogene Verteilung des Imprägniermaterials erreicht werden.

Alternativ oder zusätzlich kann die Düse verfahren werden.

Vorteilhaft ist eine Ausführung, wonach die Dosierdüse, vorzugsweise parallel zum Körper, verfahren wird.

Dies hat den Vorteil, dass jede Stelle des Körpers gut beträufelt werden kann.

Die Düse kann hierzu verfahren werden, während der Körper gedreht wird.

Die Düse kann auch verfahren werden, bevor der Körper gedreht wird und/oder nachdem der Körper gedreht wurde.

Vorteilhaft ist eine Ausführung, wonach der Körper im Bezug zur Horizontalen vertikal gekippt wird. Vorteilhaft ist hierbei ein Kippwinkel, der zwischen 5° und 60° bezüglich der Horizontalen liegt.

Vorteilhaft ist eine Ausführung, wonach der erste Winkel n·360° ist, wobei n eine natürliche Zahl ist.

Natürliche Zahlen sind 1, 2, 3, 4, 5, 6, 7, ....

Der Körper vollzieht vorteilhaft eine volle Umdrehung. Jedoch sind auch zwei oder mehr volle Umdrehungen möglich. Auch Umdrehungen <360° sind möglich.

Vorteilhaft ist eine Ausführung, wonach der zweite Winkel zwischen -(n·360° + 1°) und -(n·360° + 10°) liegt, vorzugsweise -(n·360° + 5°) ist, wobei n eine natürliche Zahl ist.

Dies hat den Vorteil, dass auch die Beträufelung gleichmäßig ist. Es soll verhindert werden, dass manche Stellem mit zu viel Imprägniermaterial beträufelt werden, was zu einem Abtropfen führen könnte. Das Abtropfen von Imprägniermaterial soll vermieden werden.

Eine besonders homogene Verteilung des Imprägniermaterials lässt sich durch eine beispielhafte Winkelfolge erreichen: 360°, -365°, +370°, ...

Vorteilhaft ist eine Ausführung, wonach der Körper abwechselnd in erster Drehrichtung um den ersten Winkel und in zweiter Drehrichtung um den zweiten Winkel bewegt wird, wobei der zweite Winkel wenigstens α₂ = -(α₁ + 1°) und höchstens α₂ = -(α₁ + 10°) ist, vorzugsweise α₂ = -(α₁ + 5°) ist.

Vorteilhaft wird der Körper während der Beträufelung derart bewegt.

Die Wicklung wird vor und/oder während und/oder nach der Beträufelung von Strom durchflossen.

Durch die joulesche Erwärmung der Wicklung wird vorteilhaft der gesamte Körper erwärmt. Eine Erwärmung mittels eines Ofens ist dann nicht mehr nötig, was zu einer Zeit- und Kostenersparnis führt. Zudem wird Energie gespart.

Der Körper kann vor, während und nach der Imprägnierung auf diese Weise erwärmt werden.

Vorteilhaft ist eine Ausführung, wonach eine dreiphasige Wicklung von Dreiphasenwechelstrom durchflossen wird, wobei eine einphasige Wicklung von Einphasenwechelstrom durchflossen wird.

Am Beispiel eines Stators mit dreiphasiger Wicklung erläutert werden vorteilhaft folgende Schritte ausgeführt: Die Zuleitungen des Stators werden an die Anschlussleitungen, die seitens einer Imprägniervorrichtung vorgesehen sind, angeschlossen bzw. mit diesen verbunden. Dies kann beispielsweise auch mittels einer Klemmplatte gelingen.

Ein Stromabgriff mittels Schleifkontakten ist auch möglich. In diesem Fall ist auch eine Dauerrotation des Körpers möglich.

Da Schleifkontakte jedoch mit vielen Nachteilen behaftet sind, z. B. Bürstenfeuer, wird eine Ausführung mit fest verbundenen Anschlussleitungen, z. B. mittels flexibler Litzenleiter mit geeignetem Querschnitt, im Rahmen der Erfindung bevorzugt.

Der Querschnitt der Litzenleiter ist vorteilhaft größer als der Querschnitt der Wicklung.

Die Anschlussleitungen sind mit einer Energieversorgungseinheit verbunden oder verbindbar, die vorzugsweise Energie in Form von Dreiphasenwechselstrom bereitstellt.

Die drei Phasen des Stators werden bestromt, wodurch sich die Wicklungen erwärmen. Die Wicklungen sind vorteilhaft als Kupferwicklungen ausgebildet.

Die Wicklungen können dauerhaft bestromt werden. Jedoch sind auch Pausen möglich.

Analog zum Beispiel "Stator" kann auch ein Rotor oder ein Transformator oder eine andere elektrische Maschine imprägniert werden.

Die Lösung der Aufgabe gelingt ferner gemäß Anspruch 12 durch eine Imprägniervorrichtung zur Imprägnierung eines wenigstens eine Wicklung tragenden Körpers, insbesondere für eine elektrische Maschine, insbesondere zur Durchführung des Verfahrens nach einem der vorhergehenden Ansprüche, aufweisend:
- einen Antrieb mit einer Antriebswelle, wobei der Antrieb zur Bewegung des Körpers um eine Rotationsachse ausgebildet ist, wobei die Antriebswelle wenigstens ein Befestigungselement zur lösbaren Anbindung des Körpers an die Antriebswelle aufweist,
- eine Träufeleinheit, wobei die Träufeleinheit zur Beträufelung des Körpers mit einem Imprägniermaterial ausgebildet ist,
- eine Anschlusseinheit, wobei die Anschlusseinheit zum Anschluss der Wicklung an eine elektrische Energieversorgung ausgebildet ist.

Die Anschlusseinheit kann eine Klemmplatte aufweisen, an welcher die Wicklungsenden anklemmbar sind.

Alternativ oder zusätzlich kann die Anschlusseinehit auch einzelne Leiter umfassen, die mit den Wicklungsenden verbindbar sind.

Alternativ oder zusätzlich kann die Anschlusseinheit auch Schleifkontakte umfassen.

Vorteilhaft ist eine Ausführung, wonach der Antrieb im Bezug zur Horizontalen vertikal kippbar ausgebildet ist.

Vorteilhaft ist eine Ausführung, wonach die Träufeleinheit eine Dosierdüse zur Ausleitung des Imprägniermaterials umfasst.

Die Lösung der Aufgabe gelingt ferner durch einen Rotor und/oder Stator, imprägniert nach einem derartigen Verfahren.

Die Erfindung bietet den Vorteil, dass ressourceneffizient imprägniert werden kann, da die auf den Körper aufgeträufelte Harzmenge exakt und individuell dosiert werden kann z. B. im Vergleich zu bekannten Tauchverfahren.

Es besteht die Möglichkeit, mehrkomponentige Harzsysteme zu verwenden, wie in EP 3 872 962 A2 bereits offenbart.

Diese mehrkomponentigen Harzsysteme weisen im gemischten Zustand eine derart hohe Reaktivität auf, dass eine Gelierung und eine Härtung bei Raumtemperatur oder nur leicht erhöhter Temperatur möglich sind.

Im Folgenden wird die Erfindung anhand der in den Figuren dargestellten Ausführungsbeispiele näher beschrieben und erläutert. Es zeigen:
- FIG 1: eine dynamoelektrische rotatorische Maschine,
- FIG 2 und FIG 3: einen Körper,
- FIG 4: eine Vorrichtung zum Imprägnieren,
- FIG 5: ein Verfahren,
- FIG 6 und FIG 7: eine Rotation.

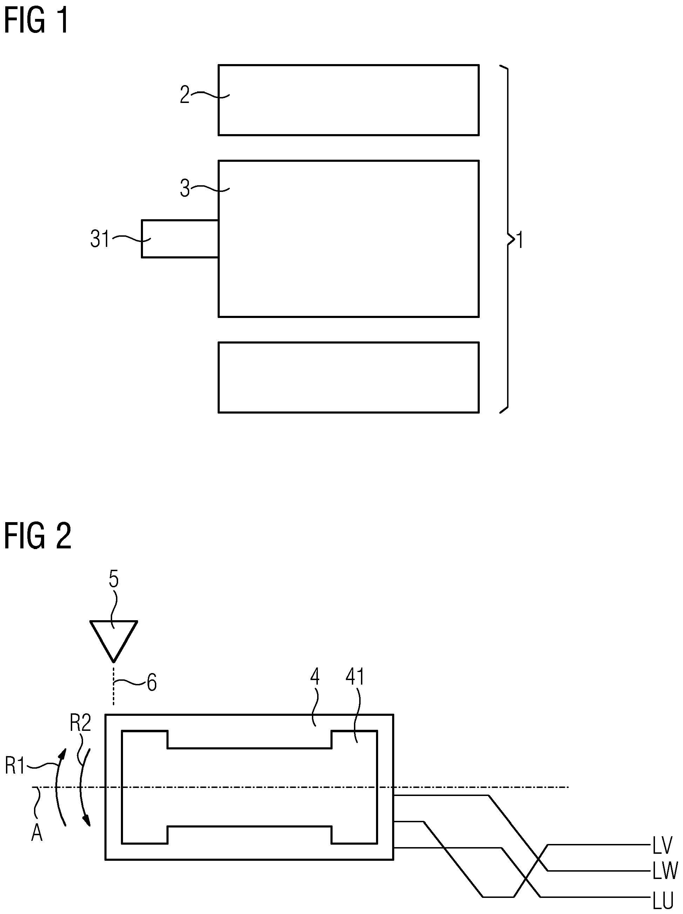

FIG 1 zeigt eine dynamoelektrische rotatorische Maschine 1 mit einem Stator 2, einem Rotor 3 und einer Welle 31.

Der Rotor und/oder Stator wurden mittels des beschriebenen Verfahrens imprägniert.

FIG 2 zeigt einen Körper 4, der eine Wicklung 41 trägt.

Der Körper 4 ist beispielsweise der in FIG 1 gezeigte Rotor 3 oder der Stator 2. Jedoch sind auch andere Körper, die eine Wicklung 41 tragen, mittels des Verfahrens imprägnierbar.

Der Körper 4 wird in der Figur imprägniert, indem dieser mittels eine Dosierdüse 5 Imprägniermaterial 6, insbesondere Harz oder eine Harz aufweisende Mischung, beträufelt wird.

Der Körper 4 wird vor und/oder während und/oder nach der Beträufelung um eine Rotationsachse A bewegt.

Die Wicklung 41 wird vor und/oder während und/oder nach der Beträufelung von Strom durchflossen.

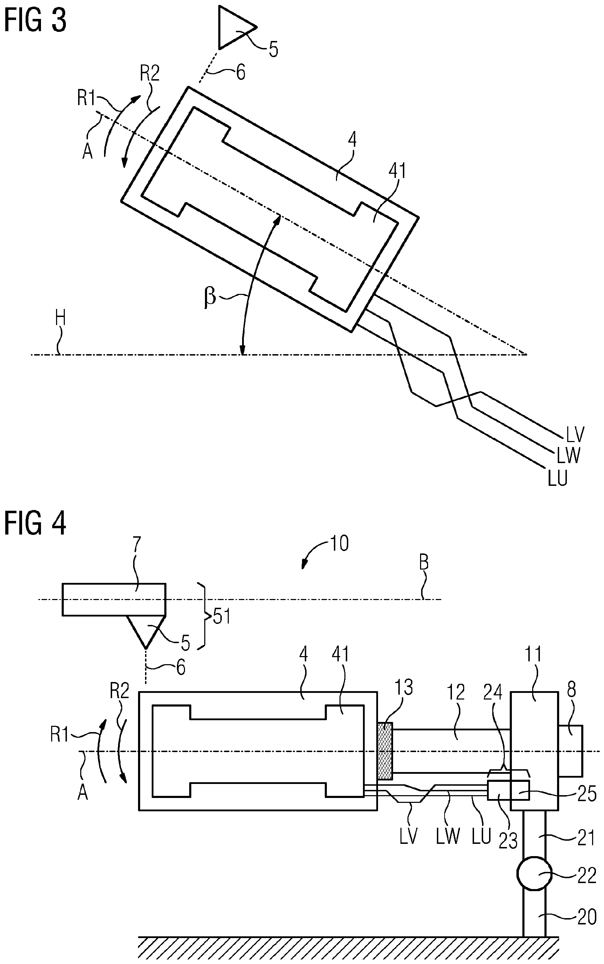

Dies gelingt in der Figur durch angeschlossene Litzenleiter LU, LV, LW. Diese sind vorteilhaft an eine Energieversorgungseinheit (siehe Bezugszeichen 25 in FIG 4) angeschlossen.

Durch den Stromfluss und einen damit einhergehenden Wärmeverlust, wird der Körper erwärmt.

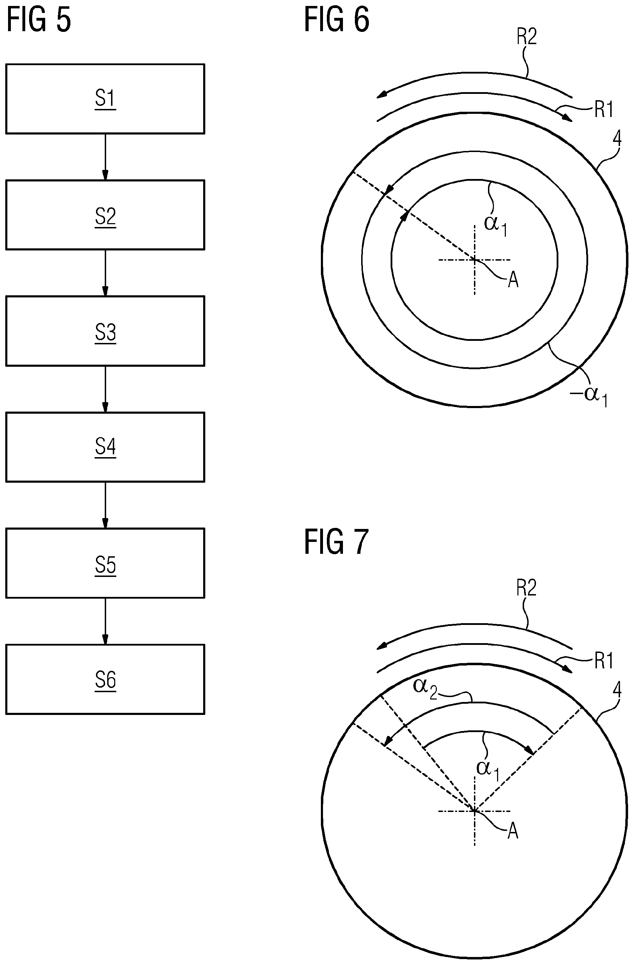

Das Bezugszeichen R1 zeigt, dass der Körper 4 um einen ersten Winkel in einer ersten Drehrichtung, vorzugsweise in positiver Drehrichtung, gedreht wird. Das Bezugszeichen R2 zeigt, dass der Körper um den negativen ersten Winkel gedreht wird. Dies wird in FIG 6 verdeutlicht.

Es ist auch möglich, dass der Körper um einen zweiten Winkel in einer zweiten Drehrichtung, vorzugsweise in negativer Drehrichtung, gedreht wird. Dies wird in FIG 7 verdeutlicht.

Vorteilhaft ist bei der Beträufelung, wenn der Körper abwechselnd in erster Drehrichtung um den ersten Winkel und in zweiter Drehrichtung um den zweiten Winkel bewegt wird, wobei der zweite Winkel wenigstens α2 = -(α1 + 1°) und höchstens α2 = -(α1 + 10°) ist, vorzugsweise α2 = -(α1 + 5°) ist.

FIG 3 zeigt den Körper 4, im Bezug zur Horizontalen vertikal gekippt ist. Vorteilhaft ist hierbei ein Kippwinkel β, der zwischen 5° und 60° bezüglich der Horizontalen liegt.

Besonders gut ist ein Kippwinkel β, der zwischen 10° und 35° bezüglich der Horizontalen liegt.

FIG 4 zeigt eine Imprägniervorrichtung 10.

Die Imprägniervorrichtung 10 zur Imprägnierung eines wenigstens eine Wicklung tragenden Körpers, insbesondere für eine elektrische Maschine 1, insbesondere zur Durchführung des Verfahrens nach einem der vorhergehenden Ansprüche, gemäß FIG 4 weist auf: Einen Antrieb 11 mit einer Antriebswelle 12, wobei der Antrieb 11 zur Bewegung des Körpers 4 um die Rotationsachse A ausgebildet ist. Die Antriebswelle 12 weist wenigstens ein Befestigungselement 13 zur lösbaren Anbindung des Körpers 4 an die Antriebswelle 12 auf.

Die in der Figur gezeigte Imprägniervorrichtung 10 weist zudem eine Träufeleinheit 51 auf, wobei die Träufeleinheit 51 zur Beträufelung des Körpers 4 mit dem Imprägniermaterial 6 ausgebildet ist.

Die Träufeleinheit 51 weist in der Figur die Dosierdüse 5 auf sowie ein Reservoir 7, in welchem das Imprägniermaterial 6 vorgehalten wird.

Die Träufeleinheit 51 kann z. B. entlang einer Achse B verfahren werden.

Zudem weist die gezeigte Imprägniervorrichtung 10 eine Anschlusseinheit 24 auf, wobei die Anschlusseinheit 24 zum Anschluss der Wicklung 41 an eine elektrische Energieversorgung ausgebildet ist. Hierzu ist in der Figur die Energieversorgungseinheit 25 dargestellt.

Die Wicklung 41 ist in der Figur mittels der Litzenleiter LU, LV, LW an die Energieversorgungseinheit angeschlossen. In der Figur gelingt dies durch eine Klemmplatte 23.

Auf diese Weise wird ein Stromfluss durch die Wicklung ermöglicht.

Die Litzenleiter sind vorteilhaft flexibel.

Die Litzenleiter sind vorteilhaft so lang, dass sie auch bei z. B. drei vollen Umdrehungen des Körpers die Wicklung 41 mit der Energieversorgungseinheit 25 verbinden und nicht abreißen bzw. sich nicht lösen. Sie können sich beim Drehen um die Antriebswelle 12 wickeln und an dieser anliegen.

Je nach Anwendung, sind die Litzenleiter so lang, dass zwischen einer und zehn vollen Umdrehungen möglich sind.

Wenn der Körper 4 z. B. in die Gegenrichtung bewegt wird, werden die auf der Antriebswelle 12 aufgewickelten Litzenleiter LU, LV, LW wieder abgewickelt.

Es ist auch möglich, mittels Schleifkontakten Strom von der Energieversorgungseinheit für die Wicklung abzugreifen. Jedoch wird die in der Figur dargestellte Ausführungsform bevorzugt.

Die Figur zeigt zudem einen Geber 8.

Die Figur zeigt einen Arm 20 und einen Arm 21, die mittels eines Gelenks 22 verbunden sind. Dies ist eine beispielhafte Ausführungsform, die ein in Bezug zur Horizontalen vertikales Kippen des Antriebs 11 bzw. des Körpers 4 ermöglicht. Es sind auch andere Formen möglich.

Beispielsweise wird ein Stator 2 oder Rotor 3 (siehe FIG 1) auf die gezeigte Antriebswelle 12 aufgespannt und mittels des Befestigungselements 13 befestigt. Auch andere Aufnahmevorrichtungen sind möglich. Vorteilhaft ist eine Aufnahmevorrichtung, die dazu ausgebildet ist, den Körper 4 um seine Längsachse zu rotieren.

Das Imprägniermaterial 6 ist vorzugsweise flüssig. Im Fall eines zu imprägnierenden Stators wird das Imprägniermaterial 6 beispielsweise auf die Wickelköpfe geträufelt und kann sich aufgrund der Drehbewegung tropffrei und homogen im Wickelkopf verteilen. Durch auftretende Kapillarkräfte kann wird das Imprägniermaterial vorteilhaft in vorliegende Nuten gezogen werden.

Da der Stator durch die Bestromung erwärmt ist bzw. erwärmt wird, wird z. B. die Fließfähigkeit des Imprägniermaterials 6, vorzugsweise des Harzes, verbessert. Zudem wird so besonders gut eine Gelierung und Härtung des Imprägniermaterials 6 herbeigeführt.

FIG 5 zeigt das Verfahren.

In einem Verfahrensschritt S1 wird der Körper 4 (siehe FIG 4) von Strom durchflossen. Der Körper 4 erwärmt sich dadurch.

Es ist möglich, eine definierte Zeitspanne abzuwarten, um mit Verfahrensschritt S2 fortzufahren. Alternativ wird unmittelbar danach im Verfahrensschritt S2 mittels der Dosierdüse 5 Imprägniermaterial 6 zur Beträufelung des Körpers 4 ausgeleitet.

Der Körper 4 wird in einem Verfahrensschritt S3 in die erste Drehrichtung R1 rotiert.

Der Körper 4 wird in einem Verfahrensschritt S4 in die zweite Drehrichtung R2 rotiert.

Die Beträufelung kann nun bereits vollständig sein und die Ausleitung des Imprägniermaterials in einem Verfahrensschritt S5 angehalten werden.

In einem Verfahrensschritt S6 kann ein Aushärten erfolgen.

Die Dosierdüse 5 kann jedoch auch, während sie Imprägniermaterial ausleitet, verfahren werden. Die Ausleitung des Imprägniermaterials kann jedoch auch gestoppt werden, wenn die Dosierdüse verfahren werden soll.

Eine Kombination von Erwärmung der Wicklung, wobei die Wicklung vorteilhaft Kupfer aufweist, durch die beschriebene Bestromung sowie das Aufbringen des Imprägniermaterials durch Träufeln und die Pendelbewegung des zu imprägnierenden Körpers verhindert ein Abtropfen des Imprägniermaterials. Eine homogene Verteilung des Imprägniermaterials, beispielsweise im Wickelkopf, oder z. B. in Nuten von Rotor oder Stator kann dadurch gut erreicht werden.

Im Verfahren kann - z. B. je nach Art und Größe des Körpers - eine Umkehrgeschwindigkeit, eine Position der Dosierdüsen, zeitweise Verringerung der Dosiermenge vor und während der Umkehr sowie eine zeitliche Varianz aufeinander folgender Umkehrprozesse variiert werden.

Die Dosiermenge kann z.B. während einer vollen Umdrehung maximiert werden, um dann während des Umkehrprozesses minimiert zu werden, um ein Abtropfen zu verhindern.

Der Umkehrprozess kann z.B. nach jeweils 360° (oder ganze Vielfache davon) oder aber nach variablen Rotationswinkeln (z.B. 1. 360°, 2. -365°, 3. +370°, ...) geschehen, um eine möglichst homogene Verteilung zu gewährleisten.

Die Anschlussleitungen können auch derart flexibel und lang ausgestaltet sein, dass nur wenige oder gar keine Umkehrungen während des eigentlichen Dosierprozesses notwendig sind. Die Länge und Art der Anschlussleitungen sind vorteilhaft so zu wählen, dass möglichst geringe joulesche Verluste in den Anschlussleitungen vorhanden sind.

Besonders vorteilhaft sind hierbei die beschriebenen flexiblen Litzenleiter mit einem geeigneten Querschnitt, der z. B. nennenswert größer ist als der Querschnitt der Wicklung. Jedoch sind auch andere Ausführungsformen möglich.

## Patentansprüche

1. Verfahren zur Imprägnierung eines wenigstens eine Wicklung (41) tragenden Körpers (4), insbesondere für eine elektrische Maschine (1), beispielsweise für einen Rotor (3) oder Stator (2), wobei der Körper (4) mit einem, vorzugsweise Harz aufweisenden, Imprägniermaterial (6) beträufelt wird, wobei der Körper (4) vor und/oder während und/oder nach der Beträufelung um eine Rotationsachse (A) bewegt wird, wobei die Wicklung (41) vor und/oder während und/oder nach der Beträufelung von Strom durchflossen wird.

2. Verfahren nach Anspruch 1, wobei der Körper (4) um einen ersten Winkel (α₁) in einer ersten Drehrichtung, vorzugsweise in positiver Drehrichtung (R1), gedreht wird, wobei der Körper (4) um den negativen ersten Winkel -(α₁) oder einen zweiten Winkel (α₂) in einer zweiten Drehrichtung (R2), vorzugsweise in negativer Drehrichtung, gedreht wird.

3. Verfahren nach einem der vorhergehenden Ansprüche, wobei der Körper (4) in der ersten Drehrichtung (R1) mit einer ersten Drehgeschwindigkeit bewegt wird, wobei der Körper (4) in der zweiten Drehrichtung (R2) mit einer zweiten Drehgeschwindigkeit bewegt wird, wobei die erste Drehgeschwindigkeit größer ist als die zweite Drehgeschwindigkeit.

4. Verfahren nach einem der vorhergehenden Ansprüche, wobei das Imprägniermaterial (6) mittels einer Dosierdüse (5) auf den Körper (4) bzw. in Richtung des Körpers (4) geleitet wird.

5. Verfahren nach einem der vorhergehenden Ansprüche, wobei das Imprägniermaterial (6) auf ein axiales Ende des Körpers (4) geleitet wird.

6. Verfahren nach einem der vorhergehenden Ansprüche, wobei die Dosierdüse (5), vorzugsweise parallel zum Körper (4), verfahren wird.

7. Verfahren nach einem der vorhergehenden Ansprüche, wobei der Körper (4) im Bezug zur Horizontalen vertikal gekippt wird.

8. Verfahren nach einem der vorhergehenden Ansprüche, wobei der erste Winkel (α₁) n·360° ist, wobei n eine natürliche Zahl ist.

9. Verfahren nach einem der vorhergehenden Ansprüche, wobei der zweite Winkel (α₂) zwischen -(n·360° + 1°) und -(n·360° + 10°) liegt, vorzugsweise -(n·360° + 5°) ist, wobei n eine natürliche Zahl ist.

10. Verfahren nach einem der vorhergehenden Ansprüche, wobei der Körper (4) abwechselnd in erster Drehrichtung (R1) um den ersten Winkel (α₁) und in zweiter Drehrichtung (R2) um den zweiten Winkel (α₂) bewegt wird, wobei der zweite Winkel wenigstens α₂ = -(α₁ + 1°) und höchstens α₂ = -(α₁ + 10°) ist, vorzugsweise α₂ = -(α₁ + 5°) ist.

11. Verfahren nach einem der vorhergehenden Ansprüche, wobei eine dreiphasige Wicklung von Dreiphasenwechelstrom durchflossen wird, wobei eine einphasige Wicklung von Einphasenwechelstrom durchflossen wird.

12. Imprägniervorrichtung (10) zur Imprägnierung eines wenigstens eine Wicklung (41) tragenden Körpers (4), insbesondere für eine elektrische Maschine (1), insbesondere zur Durchführung des Verfahrens nach einem der vorhergehenden Ansprüche, aufweisend:
- einen Antrieb (11) mit einer Antriebswelle (12), wobei der Antrieb (11) zur Bewegung des Körpers (4) um eine Rotationsachse (A) ausgebildet ist, wobei die Antriebswelle (12) wenigstens ein Befestigungselement (13) zur lösbaren Anbindung des Körpers (4) an die Antriebswelle (12) aufweist,
- eine Träufeleinheit (51), wobei die Träufeleinheit (51) zur Beträufelung des Körpers (4) mit einem Imprägniermaterial (6) ausgebildet ist,
- eine Anschlusseinheit (24), wobei die Anschlusseinheit (24) zum Anschluss der Wicklung (41) an eine elektrische Energieversorgung (25) ausgebildet ist.

13. Imprägniervorrichtung (10) nach Anspruch 12, wobei der Antrieb (12) im Bezug zur Horizontalen vertikal kippbar ausgebildet ist.

14. Imprägniervorrichtung (10) nach einem der vorhergehenden Ansprüche 12 oder 13, wobei die Träufeleinheit (51) eine Dosierdüse (5) zur Ausleitung des Imprägniermaterials (6) umfasst.

15. Rotor (3) und/oder Stator (2), imprägniert nach einem Verfahren nach einem der Ansprüche 1 bis 11.
